# EUROPEAN PATENT SPECIFICATION

(11) **EP 4 623 740 B1**
(45) Date of publication and mention of the grant of the patent: **04.11.2026**
(21) Application number: 25163826.8
(22) Date of filing: 14.03.2025
(51) Int. Cl.: A41D 13/015, A41D 13/05, A41D 31/28, B32B 3/26

(54) **WEARABLE ARTICLE AND METHOD FOR MANUFACTURING SAID WEARABLE ARTICLE**
KLEIDUNGSSTÜCK UND VERFAHREN ZUR HERSTELLUNG DES KLEIDUNGSSTÜCKS
ARTICLE VESTIMENTAIRE ET PROCÉDÉ DE FABRICATION DUDIT ARTICLE VESTIMENTAIRE

(30) Priority: 29.03.2024 IT 202400007186
(43) Date of publication of application: 01.10.2025
(73) Proprietor: Dainese S.p.A., 36064 Colceresa (Vicenza) (IT)
(72) Inventor: ZORZIN, Giovanni, 36064 Colceresa (Vicenza) (IT); SHERIDAN, David, 36064 Colceresa (VI) (IT); GUAZZO, Carlo, 36064 Colceresa (Vicenza) (IT)
(74) Representative: Pozzato, Matteo

(56) References cited:
- US-A- 4 810 559
- US-B1- 8 539 615

## Description

The present disclosure relates in general to a wearable article, such as a garment, a glove, a shoe or similar article, which has a multilayer textile structure, and a method for manufacturing said wearable article.

It is known in the clothing sector, in particular, for example, in the sector of technical clothing for sporting use, that there exists the need to manufacture articles of clothing which may be approved in accordance with existing standards, for example standards which stipulate the requirements for articles of clothing with regard to protection against impacts, impact abrasion resistance, impact cutting resistance, tearing resistance and explosion resistance, or similar protection.

In particular, hitherto, in order to obtain the certification of articles of clothing approved in accordance with the aforementioned standards, materials for external use are used in order to obtain suitable protection.

For this purpose, it is known to overmold by means of injection onto a part of the fabric intended to form the garment (and in particular on the outside of the garment) resin in the fluid state in a localized manner and in accordance with specific patterns, said resin once solidified acting as a protection, namely so as to form a protection element. Such a protection element is intended to provide protection usually in the event of an accidental fall since it absorbs and dampens the impact energy.

Underlying the present disclosure there is the recognition by the inventors that compliance with the requirements stipulated by the existing standards does not solve the problem that it is required to provide at least another separate component on an inner side provided with comfort structures facing a person's body, namely structures which may provide comfort for a user once worn.

It is therefore necessary to envisage the possibility of combining the fabric provided with protection element with other internal structures for the wearable article, in order to satisfy both the need for protection on an outer side and the need for comfort on an inner side.

The provision of additional internal structures results in the wearable article being heavy and not very versatile.

A technical problem underlying the present disclosure consists in providing a wearable article which is able to overcome the drawbacks of the prior art and therefore a protective wearable article which is as light and comfortable as possible, and also versatile, and/or which is able to achieve further advantages and/or has further characteristic features. US4810559 discloses a wearable article according to the preamble of claim 1 and a method for equipping a wearable article according to the preamble of claim 12.

The present disclosure is based on the solution idea that an improvement in comfort and lightness, while ensuring the same protection requirements, such as impact resistance, impact abrasion resistance, impact cutting resistance, tear resistance and/or other protective forms, may be effectively obtained by means of a wearable article, such as a garment, a glove, a shoe or other type of wearable article which includes a textile support layer, wherein said textile support layer has a first surface apt to face an external area, towards a possible impact or shock generating force or source, and at least a second surface intended to face a user wearing the wearable article, wherein the wearable article comprises, formed as one body with the textile support layer, a first layer of material fixed to said first surface, and a second layer of material fixed to said second surface, wherein the material of said first layer adheres and penetrates at least partially into said textile support layer and the material of said second layer penetrates at least partially into said textile support layer and wherein said first layer of material and said second layer of material respectively define first protuberances emerging from the first surface and the second layer of material defines second protuberances emerging from the second surface. According to another aspect of the present disclosure, the first layer of material is different from the second layer of material at least in terms of hardness. In this way, the layer facing an external area may, as required, consist of a material which is more or less hard compared to the layer which faces the internal zone.

"First surface" and "second surface" are understood as meaning preferably those surfaces on the two sides of the textile support layer.

Even more preferably, the material of said first layer adheres and penetrates between fibers of said textile support layer and the material of said second layer adheres and penetrates between fibers of said textile support layer.

Even more preferably, said support layer has a plurality of through-holes, preferably holes pre-punched before fixing the material of the first layer and the second layer, and said material of the first layer and said material of the second layer penetrate into said through-holes.

Even more preferably, the material of said first layer adheres and penetrates between fibers of said textile support layer and the material of said second layer adheres and penetrates between fibers of said textile support layer and said material of the first layer and said material of the second later penetrate into said through-holes.

Said material of the first layer is for example chosen from the group including polyamide, polyurethane, EPDM, polycarbonate, ABS, or combinations thereof. Said material of the second layer is chosen from the group including synthetic rubbers, NBR, SBR, silicone rubbers, etc., or combinations thereof, namely it consists preferably of less hard materials.

What is important is that the textile support layer with the layers of material define a single textile structure.

In practice, in a direction which intersects said first surface and said second surface the first protuberances are superimposed on said second protuberances, and vice versa, and the material of the two layers penetrates at least partially into the support layer so as to grip it. In other words, the first protuberances and the second protuberances are in the same region of the textile support layer on opposite sides and joined together by means of gripping of the material of the first layer and the second layer in the support layer.

Preferably, the textile support layer is a single textile support layer. Said textile support layer may form part of a structure which defines the entire wearable article and is intended to receive and accommodate the user's body.

Preferably, the first layer of material and the second layer of material are layers which are injection-molded, even more preferably co-molded, onto the textile support layer. In practice a wearable article which may include a single textile layer which defines the structure apt to receive the user's body is provided, wherein the first layer is a layer facing the outside and may be made of material which is impact-resistant or able to ensure adequate energy absorption, while the second layer is a layer which faces the user's body and may be made of a material suitable for ensuring comfort.

The textile support layer may be any layer suitable for molding material. In other words, it may consist of a "permeable" layer, which is for example meshed, knitted or a non-woven fabric, or with a similar configuration, namely with a structure which has openings or passages able to allow penetration of the material of the first layer and the second layer and allow respective fixing thereof.

Alternatively, it may be a less permeable layer which has dedicated through-holes where the material of the first layer and the material of the second layer penetrates and is fixed there.

Again alternatively, it may consist of a "permeable" layer also provided with through-holes predefined a priori depending on the layers to be obtained.

Preferably, the material of the first layer and the material of the second layer are connected together and interpenetrate across the through-holes and/or the aforementioned openings or passages of the textile support layer. A direct interface between the material of the first layer and the material of the second layer is therefore formed in the textile support layer.

The first layer and the second layer define in turn geometric figures or similar figures with a well-defined profile and correspond to protection zones of the garment, namely to protection elements.

It is thus possible to obtain a compact, multilayer, wearable article which does not require additional articles in order to provide an inner layer and which at the same time, by means of a suitable choice of materials, such as resins, is able to achieve a valid compromise between weight and performance.

For example, it is possible to create a garment, such as a jersey, or any article of clothing including an article made of light technical fabric, with a double layer of material, i.e. with the first layer of material and the second layer of material, which differ from each other, on the inner side and outer side of the garment.

Said technical jersey may be worn in a versatile manner underneath an article of clothing which is standard or apt to be combined with the jersey, without having to provide said outer article of clothing with additional protection.

Preferably, as mentioned, the two layers of material are obtained by means of overmolding on the textile support fabric, preferably by means of co-molding, namely simultaneous molding.

Co-molding consists for example in the geometric formation by means of injection-molding of a structure which exerts a mechanical/chemical gripping action on a rigid or semi-rigid element which has been made beforehand (and rigidly fixed in the mold) and which does not alter its form following injection overmolding; preferably the two injection operations on the two sides of the fabric may be performed simultaneously or in sequence. If performed in sequence, it is possible to have two separate molds and, after the first co-molding has been performed, the second co-molding is performed by changing the equipment. It is therefore quite possible for the double co-molding to be performed in two separate steps.

The wearable article which, for example, is an article for motorcycling use or in general for dynamic activities, may thus have in the zone concerned a double overmolding of protuberances which may be mapped out in accordance with a structural logic. The types of material, for example of resin, involved in the double overmolding, may be different, in terms of the type of material and the pattern formed.

In practice, it is possible to obtain two different designs and/or structures with different rigidity on the opposite sides of the same textile support layer.

Preferably, the material of the first layer and/or the second layer is a material which can be injection-molded.

Even more preferably, the material of the first layer and/or the second layer is resin. Preference may be given to resins, or moldable materials in general, which are harder with external protuberances which are shorter and edge surfaces suitable for sliding of the outer part of the wearable article. Vice versa, preference may be given to resins, or in general moldable materials, which are softer with structures which are higher and inwardly yielding so as to ensure greater comfort (since they come into contact with the user), while maintaining the energy absorption characteristics in the event of impact.

The present disclosure also relates to a method for equipping a wearable article, wherein the method involves preparing a textile support layer of the wearable article having a first surface apt to face an external area, towards a possible impact or shock generating force or source, and at least a second surface intended to face a user wearing the wearable article, and wherein the method comprises the following steps:
- molding a first material onto said first surface so as to define first protuberances which on one side adhere to said first surface, penetrating at least partially into said textile support layer, and on the other side emerge from the first surface;
- molding a second material onto the second surface so as to define second protuberances which on one side adhere to said second surface, penetrating at least partially into said textile support layer, and on the other side emerge from the second surface, wherein a first layer of first material and a second layer of second material are obtained and wherein the first layer of first material is different from the second layer of second material at least in terms of hardness.

Preferably, the textile support layer has through-holes passing between the first surface and the second surface and/or the textile support layer has a configuration with openings/passages, made of fabric, or meshed or knitted or in general with a configuration which is permeable to the first material which forms the first protuberances and to the second material which forms the second protuberances, so that the first material of the first layer interpenetrates with the material of the second layer across the through-holes and/or through the openings/passages in the textile support layer.

Moldings, for example consisting of resin, are obtained on both sides of the textile support layer so that a sandwich structure with protruding functional geometric elements is formed along the two directions perpendicular to the fabric.

Preferably, said operation consists of injection-molding, for example two resins, with hardness characteristics which are different from each other. The co-molded structure is then incorporated inside the wearable article, such as a garment for motorcycling use, in the zones where impact resistance characteristics are required in order to protect the user. The first resin and the second resin are preferably molded simultaneously onto the textile support layer. With this embodiment it is possible to optimize the production time.

For the injection-molding operation, molding dies or half-molds with respective cavities facing the support layer are prepared and these cavities are thus filled simultaneously by means of the two flows of molten material, or in two different stages (and if necessary using two different apparatus).

The resins, or other material used, merge together inside the through-holes so as to form an interface zone with improved adherence.

It is to be understood that the conditions for molding the material, such as the resins, fall within the technical knowledge of a person skilled in the sector of moldings performed on fabrics. Namely, a person skilled in the art will be familiar with the pressure, temperature and flow ranges which are suitable for ensuring that the materials, for example the resins, are able to penetrate inside the holes of the textile support layer.

It is to be understood that the wearable article according to the present disclosure may also relate to jackets and trousers, or only portions of a garment or portions of an article of clothing as well as other garments or other wearable accessories, such as gloves, so that for example in the knuckle zone, double co-molding may be performed, namely between the first layer of material and the second layer of material.

Further characteristic features and modes of use forming the subject of the present disclosure will become clear from the following detailed description of preferred examples of embodiment thereof, provided by way of a non-limiting example.

It is nevertheless evident that each embodiment may have one or more of the advantages listed above; in any case it is nevertheless not necessary that each embodiment should have simultaneously all the advantages listed.

It is also to be understood that the scope of the present disclosure includes all the possible combinations of the embodiments indicated above and of those described with reference to the following detailed description.

Reference will be made to the figures of the attached drawings in which:
- Figures 1A and 1B show, respectively, cross-sectional views of two multilayer textile structures according to the prior art;
- Figure 2A-2C show respectively cross-sectional views of multilayer textile structures according to embodiments of the present disclosure;
- Figure 3A shows an outer side view of a garment including a textile structure according to an embodiment of the present disclosure;
- Figure 3B shows an internal side view of a garment including a textile structure according to an embodiment of the present disclosure;
- Figure 4 shows a further exploded view of a multilayer textile structure according to an embodiment of the present disclosure and respective production molds;
- Figures 5A-5C show further views, from the inner side and outer side, of a multilayer textile structure according to the present disclosure;
- Figures 6A-6B show respective schematic side views of steps for fixing a multilayer structure to a protector of an article of clothing according to the present disclosure;
- Figure 7 shows a rear view of an article of clothing with a multilayer structure according to Figures 6A-6B.

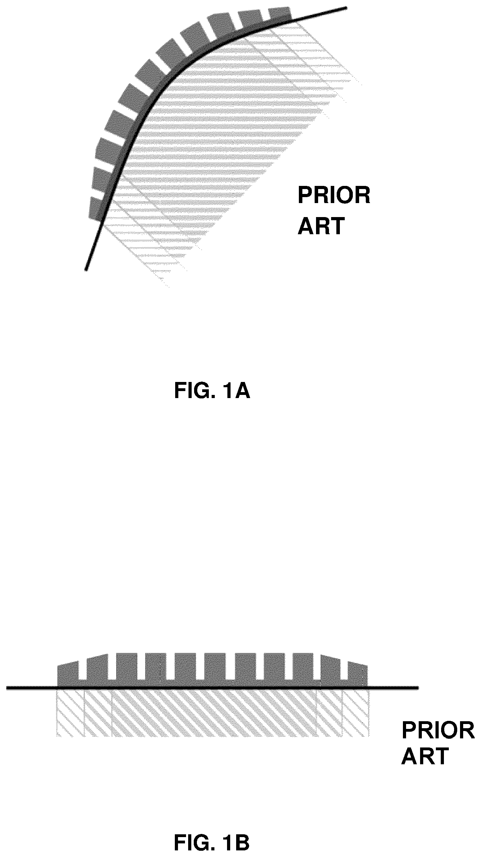

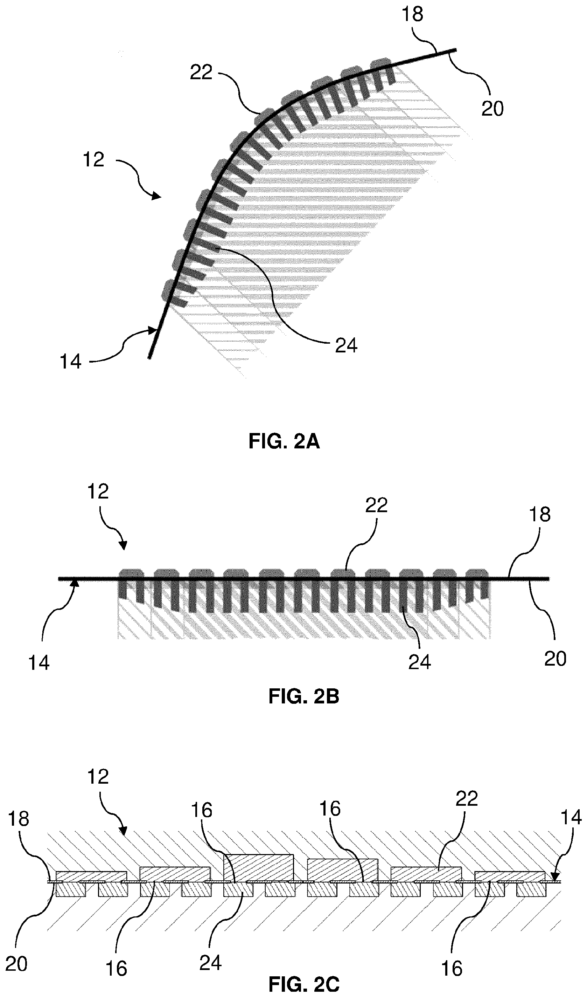

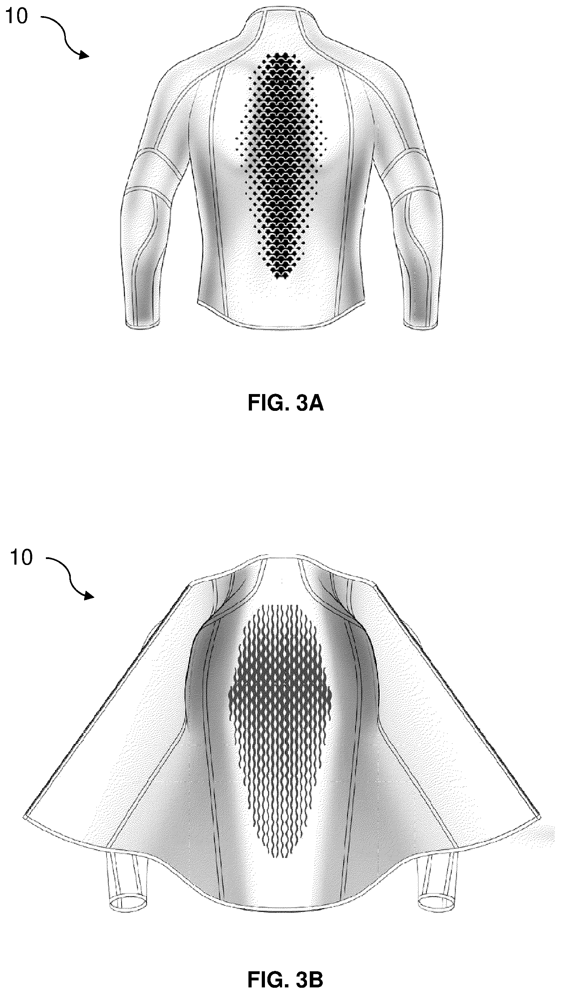

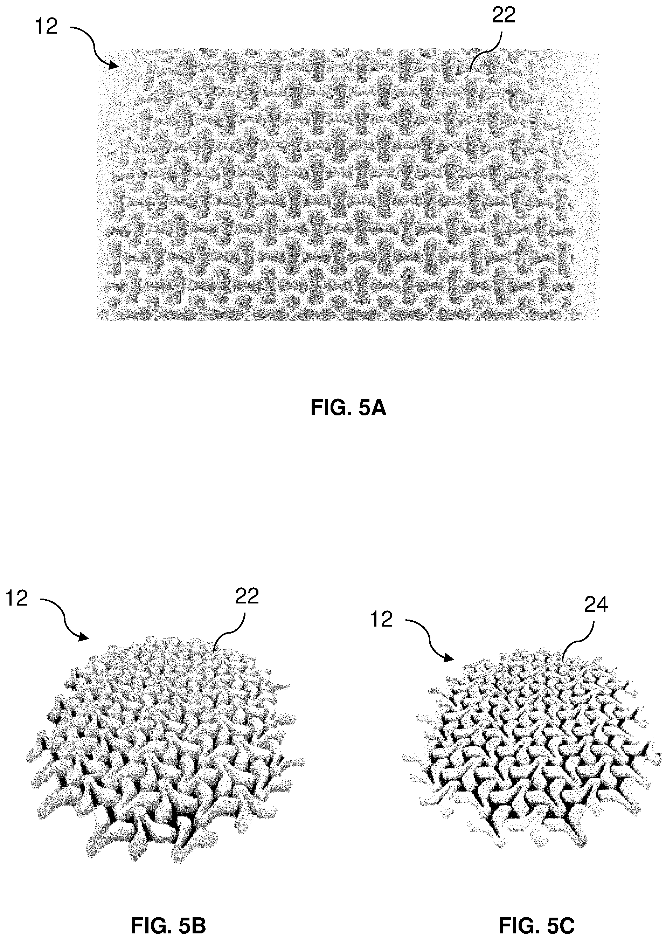

With reference to Figures 1-7, a garment according to the present disclosure comprising a multilayer textile structure 12 is denoted by the reference number 10. For example, the garment 10 is a jersey or jacket for motorcycling use.

The multilayer textile structure 12 may be associated with an elbow of the jersey, so as to provide at the same time adequate comfort and protection, or, as shown in the figures, also with a back region.

The multilayer textile structure 12 comprises a textile support layer 14 which has a plurality of through-holes 16 and/or has a permeable structure which is knitted or meshed or simply made of a wide-mesh fabric, and which defines a plurality of passages.

For example, it consists of a technical fabric for use in the motorcycling sector, and the through-holes 16 are holes formed beforehand, for example by means of punching.

The textile support layer 14 has a first surface 18 apt to face an external area, towards a possible impact or shock generating force or source, and at least a second surface 20 intended to face a user wearing the wearable article, and therefore facing an internal area.

The garment 10 comprises a first layer of material, preferably a first layer of resin 22 fixed to said first surface 18, wherein said first layer of resin 22 adheres and penetrates into said textile support layer 14, preferably between the fibers of said textile support layer 14.

The garment 10 comprises a second layer of material, preferably a second layer of resin 24 fixed to said second surface 20, wherein said second layer of resin 24 adheres and penetrates into said textile support layer 14, preferably between the fibers of said textile support layer 14.

As can be seen from the figures, said first resin layer 22 and said second resin layer 24 respectively define first protuberances emerging from the first surface 18 and the second resin layer defines second protuberances emerging from the second surface 20. The first layer 22 is different from the second layer at least in terms of hardness. The first resin layer 22 is in direct contact with the second resin layer 24 in an interface zone in the through-holes 16 and in the passages/openings of the textile support layer 14.

Consequently, in a direction which intersects said first surface 18 and said second surface 20, the first protuberances are superimposed on said second protuberances and vice versa. Basically, the first protuberances and said second protuberances are in the same region of the textile support layer 14 on opposite sides.

The textile support layer 14 is a single textile support layer and therefore a very light textile structure which incorporates two different forms of protection offered by the two resins may be obtained. Preferably, the types of resin involved in the double overmolding process may be different.

Preferably, the first resin layer 22 and the second resin layer 24 are layers which are injection-molded onto the textile support layer. Basically, the two resin layers are obtained by means of overmolding.

For this purpose it is envisaged injecting a first resin onto said first surface 18 so as to define first protuberances which on one side adhere to said first surface 18 and on the other side emerge from the first surface 18, and injecting a second resin onto the second surface 20 so as to define second protuberances which on one side adhere to said second surface 20 and on the other side emerge from the second surface 20.

The second resin interpenetrates with the first resin across the through-holes 16 in the textile support layer 14 and/or in the passages/openings of the textile support layer 14.

Resin moldings are obtained on both sides of the textile support layer 14 so that a sandwich structure with protruding functional geometric elements is formed along the two directions perpendicular to the fabric.

The first resin and the second resin are preferably molded simultaneously onto the textile support layer.

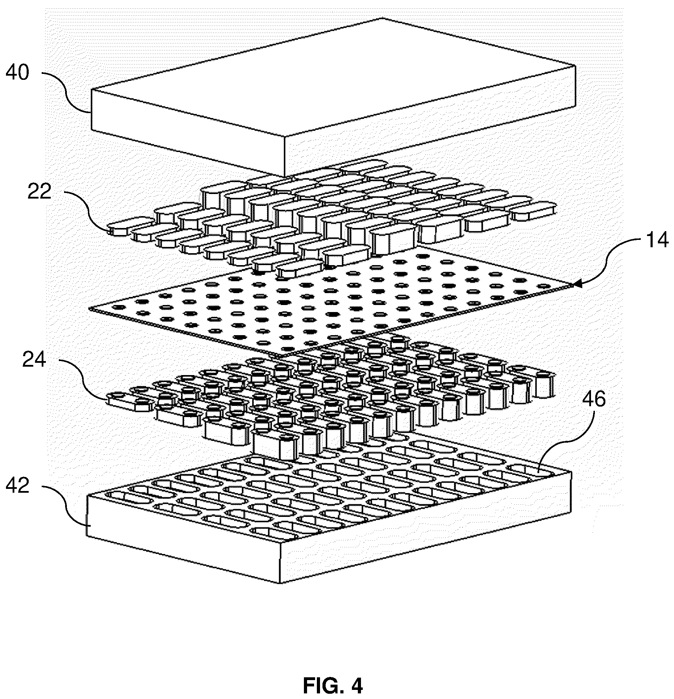

For the injection-molding process, molding dies or half-molds 40, 42 are prepared (Figure 4) and the textile support layer 14 arranged between the molding dies 40, 42.

The molding dies or half-molds 40, 42 have respective cavities 46 facing the support layer 14 and these cavities are thus filled simultaneously by the two flows of molten material.

The resins merge together inside the through-holes so as to form an interface zone with improved adherence.

In other words, in order to perform said injection co-molding, the cavities 44 opposite the fabric are filled with two separate pressurized flows of molten resin which tend to penetrate into the fabric on opposite sides. Once the resin has solidified after this "absorption" effect, the structure is very stable.

The second support layer 24 may then be provided with a fastening component 50, of the known type, for example magnetic type, for fixing, also removable fixing, to an outer layer 52 with an additional plate 53.

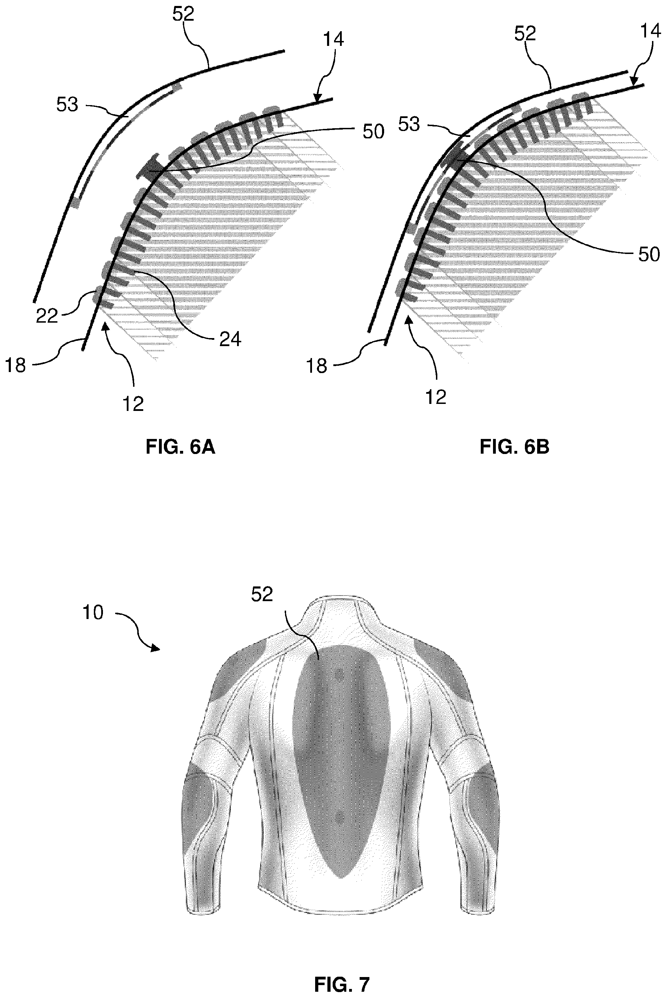

In this way, by providing a jersey or very light jacket which acts as a "universal" or standard garment, such a jersey or light jacket, or in general such an undergarment, may then be attached to another stronger and more protective garment, as visible in Figures 6A-6B and Figure 7.

The subject-matter of the present disclosure has been described hitherto with reference to preferred embodiments thereof. It is to be understood that other embodiments relating to the same inventive concept may exist, that fall within the scope of protection of the claims which are attached hereinbelow.

## Claims

1. Wearable article (10), wherein said wearable article (10) includes a textile support layer (14), wherein said textile support layer (14) has a first surface (18) apt to face an external area, towards a possible impact or shock generating force or source, and at least a second surface (20) intended to face a user wearing the wearable article, wherein the wearable article comprises, formed as one body with the textile support layer (14), a first layer of material (22) fixed to said first surface (18), wherein the material of said first layer of material (22) adheres and penetrates at least partially into said textile support layer (14), and a second layer of material (24) fixed to said second surface (20), wherein the material of said second layer adheres and penetrates at least partially into said textile support layer (14), wherein said first layer of material (22) and said second layer of material (24) respectively define first protuberances emerging from the first surface (18) and the second layer of material (24) defines second protuberances emerging from the second surface (20),
**characterized in that**
the first layer of material (22) is different from the second layer of material (24) at least in terms of hardness.

2. Wearable article (10) according to claim 1, wherein the material of said first layer adheres and penetrates between fibers of said textile support layer and the material of said second layer adheres and penetrates between fibers of said textile support layer and/or said support layer has a plurality of through-holes (16), said material of the first layer (22) and said material of the second layer (24) penetrating into said through-holes (16).

3. Wearable article (10) according to claim 1 or 2, wherein the material of the first layer of material (22) interpenetrates and/or mixes itself with the material of the second layer of material (24).

4. Wearable article (10) according to claim 1 or 2, wherein the material of the first layer of material (22) and the material of the second layer of material (24) is resin.

5. Wearable article (10) according to any one of the preceding claims, wherein the first layer of material (22) and the second layer of material (24) are layers of resin injection-molded onto the textile support layer (14).

6. Wearable article (10) according to claim 4 or 5, wherein the resin of the first resin layer (22) is different from the resin of the second resin layer (24).

7. Wearable article (10) according to any one of the preceding claims, wherein the material of the first layer of material (22) is harder than the material of the second layer (24).

8. Wearable article (10) according to any one of the preceding claims, wherein the first layer of material (22) has protuberances shorter than the protuberances of the second layer of material (24).

9. Wearable article (10) according to any one of the preceding claims, wherein the wearable article is a garment for dynamic activities and/or an undergarment which can be combined with an overgarment.

10. Wearable article (10) according to any one of the preceding claims, wherein the wearable article is a motorcycle garment.

11. Wearable assembly (10) according to any one of the preceding claims, in combination with an outer garment.

12. Method for equipping a wearable article, wherein the method involves preparing a textile support layer (14) of the wearable article having a first surface (18) apt to face an external area, towards a possible impact or shock generating force or source, and at least a second surface (20) intended to face a user wearing the wearable article, and wherein the method comprises
- molding a first material onto said first surface (18) so as to define first protuberances which on one side adhere to said first surface (18), penetrating at least partially into said textile support layer, and on the other side emerge from the first surface (18) ;
- molding a second material onto the second surface (20) so as to define second protuberances which on one side adhere to said second surface (20), penetrating at least partially into said textile support layer, and on the other side emerge from the second surface (20);
wherein a first layer of first material (22) and a second layer of second material (24) are obtained, and **characterized in that** the first layer of first material (22) is different from the second layer of second material (24) at least in terms of hardness.

13. Method according to the preceding claim, wherein the first material interpenetrates at least partially with the second material in through-holes (16) and/or in passages of the textile support layer.

14. Method according to claim 12 or 13, wherein the first material and the second material are resins and, in order to mold said first material and said second material, said two resins with hardness characteristics different from each other are injected.

15. Method according to claim 14, wherein the first resin and the second resin are molded simultaneously onto the textile support layer (14).

16. Method according to any one of the preceding claims 12 to 15, wherein, in order to inject the first material and the second material, molding dies or half-molds (40, 42) are prepared with respective cavities (44) facing the textile support layer (14), and these cavities (44) are filled with flows of molten material.

17. Method according to any one of the preceding claims 12 to 16, wherein the wearable article (10) is the wearable article according to any one of the preceding claims 1 to 11.

## Patentansprüche

1. Tragbarer Artikel (10), wobei der tragbare Artikel (10) eine textile Stützschicht (14) einschließt, wobei die textile Stützschicht (14) eine erste Oberfläche (18), die geeignet ist, einem äußeren Bereich in Richtung einer möglichen aufprall- oder stoßerzeugenden Kraft oder Quelle zugewandt zu sein, und mindestens eine zweite Oberfläche (20) aufweist, die dazu bestimmt ist, einem Benutzer zugewandt zu sein, der den tragbaren Artikel trägt, wobei der tragbare Artikel eine mit der textilen Stützschicht (14) einstückig ausgebildete erste Materialschicht (22), die an der ersten Oberfläche (18) befestigt ist, wobei das Material der ersten Materialschicht (22) an der textilen Stützschicht (14) haftet und mindestens teilweise in diese eindringt, und eine zweite Materialschicht (24) umfasst, die an der zweiten Oberfläche (20) befestigt ist, wobei das Material der zweiten Schicht an der textilen Stützschicht (14) haftet und mindestens teilweise in diese eindringt, wobei die erste Materialschicht (22) beziehungsweise die zweite Materialschicht (24) erste Vorsprünge definieren, die aus der ersten Oberfläche (18) hervortreten, und die zweite Materialschicht (24) zweite Vorsprünge definiert, die aus der zweiten Oberfläche (20) hervortreten,
**dadurch gekennzeichnet, dass** sich die erste Materialschicht (22) von der zweiten Materialschicht (24) mindestens hinsichtlich einer Härte unterscheidet.

2. Tragbarer Artikel (10) nach Anspruch 1, wobei das Material der ersten Schicht zwischen Fasern der textilen Stützschicht haftet und eindringt und das Material der zweiten Schicht zwischen Fasern der textilen Stützschicht haftet und eindringt und/oder die Stützschicht eine Vielzahl von Durchgangslöchern (16) aufweist, wobei das Material der ersten Schicht (22) und das Material der zweiten Schicht (24) in die Durchgangslöcher (16) eindringen.

3. Tragbarer Artikel (10) nach Anspruch 1 oder 2, wobei das Material der ersten Materialschicht (22) und das Material der zweiten Materialschicht (24) ineinander eindringen und/oder sich vermischen.

4. Tragbarer Artikel (10) nach Anspruch 1 oder 2, wobei das Material der ersten Materialschicht (22) und das Material der zweiten Materialschicht (24) Harz ist.

5. Tragbarer Artikel (10) nach einem der vorstehenden Ansprüche, wobei die erste Materialschicht (22) und die zweite Materialschicht (24) Harzschichten sind, die auf die textile Stützschicht (14) spritzgeformt sind.

6. Tragbarer Artikel (10) nach Anspruch 4 oder 5, wobei sich das Harz der ersten Harzschicht (22) von dem Harz der zweiten Harzschicht (24) unterscheidet.

7. Tragbarer Artikel (10) nach einem der vorstehenden Ansprüche, wobei das Material der ersten Materialschicht (22) härter als das Material der zweiten Schicht (24) ist.

8. Tragbarer Artikel (10) nach einem der vorstehenden Ansprüche, wobei die erste Materialschicht (22) Vorsprünge aufweist, die kürzer als die Vorsprünge der zweiten Materialschicht (24) sind.

9. Tragbarer Artikel (10) nach einem der vorstehenden Ansprüche, wobei der tragbare Artikel ein Bekleidungsgegenstand für dynamische Aktivitäten und/oder ein Unterbekleidungsgegenstand ist, der mit einem Oberbekleidungsgegenstand kombiniert werden kann.

10. Tragbarer Artikel (10) nach einem der vorstehenden Ansprüche, wobei der tragbare Artikel ein Motorradbekleidungsgegenstand ist.

11. Tragbare Anordnung (10) nach einem der vorstehenden Ansprüche in Kombination mit einem Oberbekleidungsgegenstand.

12. Verfahren zum Ausstatten eines tragbaren Artikels, wobei das Verfahren ein Anfertigen einer textilen Stützschicht (14) des tragbaren Artikels beinhaltet, die eine erste Oberfläche (18), die geeignet ist, einem äußeren Bereich in Richtung einer möglichen aufprall- oder stoßerzeugenden Kraft oder Quelle zugewandt zu sein, und mindestens eine zweite Oberfläche (20) aufweist, die dazu bestimmt ist, einem Benutzer zugewandt zu sein, der den tragbaren Artikel trägt, und wobei das Verfahren umfasst
- Formen eines ersten Materials auf die erste Oberfläche (18), um erste Vorsprünge zu definieren, die auf einer Seite an der ersten Oberfläche (18) haften, wobei sie mindestens teilweise in die textile Stützschicht eindringen, und auf der anderen Seite aus der ersten Oberfläche (18) hervortreten;
- Formen eines zweiten Materials auf die zweite Oberfläche (20), um zweite Vorsprünge zu definieren, die auf einer Seite an der zweiten Oberfläche (20) haften, wobei sie mindestens teilweise in die textile Stützschicht eindringen, und auf der anderen Seite aus der zweiten Oberfläche (20) hervortreten;
wobei eine erste Schicht aus erstem Material (22) und eine zweite Schicht aus zweitem Material (24) erhalten werden, und **dadurch gekennzeichnet, dass** die erste Schicht aus erstem Material (22) sich von der zweiten Schicht aus zweitem Material (24) mindestens hinsichtlich der Härte unterscheidet.

13. Verfahren nach dem vorstehenden Anspruch, wobei das erste Material und das zweite Material in Durchgangslöchern (16) und/oder in Durchgängen der textilen Stützschicht mindestens teilweise ineinander eindringen.

14. Verfahren nach Anspruch 12 oder 13, wobei das erste Material und das zweite Material Harze sind und, um das erste Material und das zweite Material zu formen, die zwei Harze mit Härteeigenschaften, die sich voneinander unterscheiden, eingespritzt werden.

15. Verfahren nach Anspruch 14, wobei das erste Harz und das zweite Harz gleichzeitig auf die textile Stützschicht (14) geformt werden.

16. Verfahren nach einem der vorstehenden Ansprüche 12 bis 15, wobei, um das erste Material und das zweite Material einzuspritzen, Formwerkzeuge oder Halbformen (40, 42) mit jeweiligen Hohlräumen (44) angefertigt werden, die der textilen Stützschicht (14) zugewandt sind, und diese Hohlräume (44) mit Strömen aus geschmolzenem Material gefüllt werden.

17. Verfahren nach einem der vorstehenden Ansprüche 12 bis 16, wobei der tragbare Artikel (10) der tragbare Artikel nach einem der vorstehenden Ansprüche 1 bis 11 ist.

## Revendications

1. Article portable (10), dans lequel ledit article portable (10) comporte une couche de support textile (14), dans lequel ladite couche de support textile (14) présente une première surface (18) apte à faire face à une zone externe, vers une force ou source génératrice d'impact ou de choc éventuel, et au moins une seconde surface (20) destinée à faire face à un utilisateur portant l'article portable, dans lequel l'article portable comprend, formée d'un seul tenant avec la couche de support textile (14), une première couche de matériau (22) fixée à ladite première surface (18), dans lequel le matériau de ladite première couche de matériau (22) adhère et pénètre au moins partiellement dans ladite couche de support textile (14), et une seconde couche de matériau (24) fixée à ladite seconde surface (20), dans lequel le matériau de ladite seconde couche adhère et pénètre au moins partiellement dans ladite couche de support textile (14), dans lequel ladite première couche de matériau (22) et ladite seconde couche de matériau (24) définissent respectivement des premières protubérances émergeant de la première surface (18) et la seconde couche de matériau (24) définit des secondes protubérances émergeant de la seconde
surface (20),**caractérisé en ce que** la première couche de matériau (22) est différente de la seconde couche de matériau (24) au moins en termes de dureté.

2. Article portable (10) selon la revendication 1, dans lequel le matériau de ladite première couche adhère et pénètre entre les fibres de ladite couche de support textile et le matériau de ladite seconde couche adhère et pénètre entre les fibres de ladite couche de support textile et/ou ladite couche de support présente une pluralité de trous traversants (16), ledit matériau de la première couche (22) et ledit matériau de la seconde couche (24) pénétrant dans lesdits trous traversants (16).

3. Article portable (10) selon la revendication 1 ou 2, dans lequel le matériau de la première couche de matériau (22) s'interpénètre et/ou se mélange avec le matériau de la seconde couche de matériau (24).

4. Article portable (10) selon la revendication 1 ou 2, dans lequel le matériau de la première couche de matériau (22) et le matériau de la seconde couche de matériau (24) sont de la résine.

5. Article portable (10) selon l'une quelconque des revendications précédentes, dans lequel la première couche de matériau (22) et la seconde couche de matériau (24) sont des couches de résine moulées par injection sur la couche de support textile (14).

6. Article portable (10) selon la revendication 4 ou 5, dans lequel la résine de la première couche de résine (22) est différente de la résine de la seconde couche de résine (24).

7. Article portable (10) selon l'une quelconque des revendications précédentes, dans lequel le matériau de la première couche de matériau (22) est plus dur que le matériau de la seconde couche (24).

8. Article portable (10) selon l'une quelconque des revendications précédentes, dans lequel la première couche de matériau (22) présente des protubérances plus courtes que les protubérances de la seconde couche de matériau (24).

9. Article portable (10) selon l'une quelconque des revendications précédentes, dans lequel l'article portable est un vêtement pour activités dynamiques et/ou un sous-vêtement qui peut être combiné avec un vêtement de dessus.

10. Article portable (10) selon l'une quelconque des revendications précédentes, dans lequel l'article portable est un vêtement de moto.

11. Ensemble portable (10) selon l'une quelconque des revendications précédentes, en combinaison avec un vêtement d'extérieur.

12. Procédé permettant d'équiper un article portable, dans lequel le procédé implique la préparation d'une couche de support textile (14) de l'article portable ayant une première surface (18) apte à faire face à une zone externe, vers une force ou une source génératrice d'impact ou de choc éventuel, et au moins une seconde surface (20) destinée à faire face à un utilisateur portant l'article portable, et dans lequel le procédé comprend
- le moulage d'un premier matériau sur ladite première surface (18) de manière à définir des premières protubérances qui, d'un côté, adhèrent à ladite première surface (18), pénétrant au moins partiellement dans ladite couche de support textile, et, de l'autre côté, émergent de la première surface (18) ;
- le moulage d'un second matériau sur la seconde surface (20) de manière à définir des secondes protubérances qui d'un côté adhèrent à ladite seconde surface (20), pénétrant au moins partiellement dans ladite couche de support textile, et de l'autre côté émergent de la seconde surface (20) ;
dans lequel une première couche de premier matériau (22) et une seconde couche de second matériau (24) sont obtenues, et
**caractérisé en ce que** la première couche de premier matériau (22) est différente de la seconde couche de second matériau (24) au moins en termes de dureté.

13. Procédé selon la revendication précédente, dans lequel le premier matériau s'interpénètre au moins partiellement avec le second matériau dans des trous traversants (16) et/ou dans des passages de la couche de support textile.

14. Procédé selon la revendication 12 ou 13, dans lequel le premier matériau et le second matériau sont des résines et, afin de mouler ledit premier matériau et ledit second matériau, lesdites deux résines ayant des caractéristiques de dureté différentes l'une de l'autre sont injectées.

15. Procédé selon la revendication 14, dans lequel la première résine et la seconde résine sont moulées simultanément sur la couche de support textile (14).

16. Procédé selon l'une quelconque des revendications précédentes 12 à 15, dans lequel, afin d'injecter le premier matériau et le second matériau, des matrices de moulage ou des demi-moules (40, 42) sont préparés avec des cavités (44) respectives faisant face à la couche de support textile (14), et ces cavités (44) sont remplies de flux de matériau fondu.

17. Procédé selon l'une quelconque des revendications précédentes 12 à 16, dans lequel l'article portable (10) est l'article portable selon l'une quelconque des revendications précédentes 1 à 11.
